# EUROPÄISCHE PATENTSCHRIFT

(11) **EP 3 313 652 B1**
(45) Veröffentlichungstag und Bekanntmachung des Hinweises auf die Patenterteilung: **04.10.2023**
(21) Anmeldenummer: 16732275.9
(22) Anmeldetag: 23.06.2016
(51) Int. Cl.: B29D 11/00

(54) **VERFAHREN ZUR HERSTELLUNG VON LINSENANORDNUNG, LINSENANORDNUNG, VERWENDUNG EINER LINSENANORDNUNG**
METHOD FOR PRODUCING A LENS ARRAY, LENS ARRAY AND USE OF A LENS ARRAY
PROCÉDÉ DE FABRICATION D'UN RESEAU DE LENTILLES, RESEAU DE LENTILLES ET UTILISATION D'UN RESEAU DE LENTILLES

(30) Priorität: 24.06.2015 DE 102015110180
(43) Veröffentlichungstag der Anmeldung: 02.05.2018
(73) Patentinhaber: Trilux GmbH & Co. KG, 59759 Arnsberg (DE)
(72) Erfinder: LEWERS, Christoph, 59757 Arnsberg (DE); SELTMANN, Stefan, 59821 Arnsberg (DE)
(74) Vertreter: Lippert Stachow Patentanwälte Rechtsanwälte
(86) Internationale Anmeldenummer: PCT/EP2016/064592
(87) Internationale Veröffentlichungsnummer: WO 2016/207305

(56) Entgegenhaltungen:
- US-A1- 2010 053 973
- US-A1- 2011 298 877
- US-A1- 2013 235 581
- US-A1- 2015 153 589
- US-B1- 8 068 288

## Beschreibung

Die vorliegende Erfindung betrifft ein Verfahren zur Herstellung von optischen Linsenanordnungen für LED-Anordnungen nach Anspruch 1, eine Linsenanordnung nach Anspruch 10 und die Verwendung einer Linsenanordnung nach Anspruch 11 oder 12.

Bei bekannten Lichtquellen, wie Flammen, Glühlampen, Fluoreszenzlampen und lichtemittierende Dioden (LED), kann das emittierte Licht meist nicht optimal für den Beleuchtungszweck genutzt werden, weil es zumindest teilweise in unerwünschte Richtungen abgestrahlt wird. Daher ist es seit langem üblich, die Lichtquelle mit einem optischen System zu versehen, das möglichst viel des abgestrahlten Lichts sammelt und dem Beleuchtungszweck zuführt. Wegen ihrer überlegenen Lichtausbeute werden heutzutage LED als Lichtquellen bevorzugt. Diese weisen im Vergleich zu den herkömmlichen Lichtquellen nur eine kleine emittierende Fläche auf und emittieren im Allgemeinen nur in den vorderen Halbraum, so dass die herkömmlichen optischen Systeme nicht brauchbar sind.

Die Aufgabe des optischen Systems in einer Beleuchtungsvorrichtung kann verschiedenartig sein. Beispielsweise kann im Vordergrund die Fokussierung einer möglichst hohen Lichtmenge auf einen kleinen Strahlquerschnitt sein. Bei anderen Anwendungen ist wiederum eine möglichst gleichmäßige Ausleuchtung einer größeren Fläche erwünscht. Auch die Beeinflussung der Strahlrichtung, beispielsweise zur Entblendung, kann angestrebt werden. Häufig besteht das optische System aus einer oder mehreren Linsen.

Bei Linsensystemen können zwei Bereiche unterschieden werden: ein Einkopplungsbereich in dem das von der Lichtquelle emittierte Licht in das Linsensystem eintritt, und der einen möglichst großen Anteil des emittierten Lichtstroms dem Linsensystem zuführen soll, und einen Auskopplungsbereich, in dem die Divergenz des austretenden Lichtstrahls und die Leuchtdichtenverteilung über seinen Querschnitt festgelegt wird, und der in der Regel gegenüber dem Einkopplungsbereich liegt. Obwohl für beide Bereiche unterschiedliche optische Bauteile verwendet werden können, ist es meist vorteilhafter, die Bereiche in einem Bauteil zusammenzufassen. Ein Beispiel dafür ist die so genannte TIR-Linse aus einem Körper der einerseits eine Kavität oder Ausnehmung für eine LED aufweist, die annähernd deren ganzen vorderen Halbraum umfasst und so nahezu alles von der LED emittierte Licht in den Linsenkörper einkoppeln kann, und andererseits geeignet geformte Reflexions- und Austrittsflächen, welche dem austretenden Licht die gewünschten Eigenschaften verleihen. Ein Beispiel für eine solche Linse gibt EP 117 606 A1.

Diese so genannten TIR Linsen sind als Massenartikel, beispielsweise für Taschenlampen und Kfz-Beleuchtungen, weit verbreitet. Sie werden üblicherweise aus einem transparenten thermoplastischen Kunststoff mit hinreichend hohem Brechungsindex im Spritzgussverfahren hergestellt. Dies gilt sowohl für einzelne Linsen als auch für Linsenanordnungen für die Anwendung mit LED-Anordnungen, beispielsweise für die Ausleuchtung großer Flächen.

US 2013/235581 A1 beschreibt ein Verfahren zur Herstellung einer Linsenanordnung und eine Linsenanordnung.

US 2009/0213476 A1 beschreibt Linsen, die aus einer Grundlinse und einer auf dieser angebrachten Kunststofflinse zusammengesetzt sind. Bei der Herstellung wird auf die Grundlinse aus Glas oder Kunststoff durch Formpressen die mit dieser verbundenen Kunststofflinse gebildet. Diese ist mit speziell geformten Seitenflächen versehen, um die Ausrichtung der optischen Achsen beider Linsen aufeinander zu erleichtern.

In WO 2014/160 673 A1 wird ein optischer Film beschrieben, der das aus den Hauptfläche einer Lichtleiterplatte schräg austretende Licht senkrecht zur Hauptfläche ausrichten soll. Auf den Oberflächen des Films sind langgestreckte prismatische und/oder zylindrische Strukturen ausgebildet, die durch Prägen, Thermoformen oder 3D-Druck erzeugt worden sind.

DE 10 2014 202 017 A1 offenbart eine dicke Linse, die aus 2 Teilen zusammengesetzt wird, welche miteinander verschränkte Rippen aufweisen. Dadurch soll die Gleichmäßigkeit der im Spritzguss hergestellten Linsen verbessert werden.

DE 600 27 147 T2 beschreibt eine ophthalmische Verbundlinse. Diese wird hergestellt, indem eine Vorform mit parallelen Seiten, die später die vordere Schicht der Linse bildet, einem Formelement gegenübergestellt wird. In den so gebildeten Hohlraum wird eine polymerisierbare Zusammensetzung eingebracht, welche thermisch polymerisiert wird.

DE 10 2009 047 735 A1 schlägt vor, anstelle des bekannten Spritzprägens einen Vorformling herzustellen und diesen danach zu prägen.

Die Firma die Firma Eschenbach Optik GmbH hat Fresnellinsen angekündigt, bei denen auf einer in eine Spritzgussform eingelegte Glasscheibe eine optische Schicht aus Silikon überspritzt wird (Th. Luce, Spectaris-Forum, München 2011).

US 2015/0153589 A1 offenbart ein Verfahren zur Herstellung eines Brillenglases, bei dem auf die Oberfläche einer Hauptlinse eine Zusatzlinse aufgebracht wird, um sie schneller und kostengünstig für einzelne Träger anzupassen.

Nachteilig beim Spritzgussverfahren und ähnlichen Verfahren mit einer geschlossenen Form ist, dass eine Änderung in der Gestalt des Produkts, wie sie durch eine neue Anforderung an die Eigenschaften des aus der Linsenanordnung austretenden Lichts notwendig wird, die Anfertigung neuer Formen notwendig macht, was erhebliche Kosten verursacht und die Herstellung kleiner Serien unwirtschaftlich macht.

Die Erfindung stellt sich die Aufgabe, die Verfahren nach dem Stand der Technik so weiterzubilden, dass auch kleine Serien wirtschaftlich gefertigt werden können.

Die Aufgabe wird durch ein Verfahren nach dem Hauptanspruch gelöst.

Die Erfindung gilt von der Erkenntnis aus, dass die Zahl der unterschiedlichen Gestaltungen des Auskopplungsbereichs wesentlich größer ist als die der Formen für den Einkopplungsbereich. Dementsprechend schlägt die Erfindung vor, in einem ersten Schritt einen Vorformling durch ein Spritzgussverfahren herzustellen, der die Einkopplungsbereiche der herzustellenden Linsenanordnung umfasst. Dieser Vorformling kann dann für Linsenanordnungen weiterverwendet werden, die an denselben oder gar an mehrere untereinander ähnliche Typen von Lichtquellen wie beispielsweise LED angepasst sein sollen.

Additive Fertigung - englisch: Additive Manufacturing (AM) - ist eine umfassende Bezeichnung für Verfahren zur schnellen und kostengünstigen Fertigung von Modellen, Mustern, Prototypen, Werkzeugen und Endprodukten. Diese Fertigung kann direkt auf der Basis der rechnerinternen Datenmodelle (Übergabe meist über die STL-Schnittstelle) aus formlosem (Flüssigkeiten, Pulver u. ä.) oder formneutralem (band-, drahtförmig) Material mittels chemischer und/oder physikalischer Prozesse erfolgen.

Zusätzlich zur Ausbildung des Auskopplungsbereichs der fertigen Linsenanordnung durch Anwendung eines additiven Fertigungsverfahren können auch die optischen Eigenschaften des Einkopplungsbereichs am Vorformling durch Anwendung eines additiven Fertigungsverfahrens modifiziert werden.

Die Einkopplungsbereiche umfassen bevorzugt Kavitäten oder Ausnehmungen in einer Fläche des Vorformlings. Die Ausnehmung kann mehrerlei Formen annehmen, darunter zylindrische, sphärische und Quaderform, ohne darauf beschränkt zu sein. Die Tiefe der Ausnehmung ist zweckmäßig so bemessen, dass sie die Lichtquelle, vorzugsweise eine LED, die auf einer Basis das lichtemittierende Schichtsystem aufweist und Licht nur in einen von der Basis begrenzten Halbraum emittiert, soweit aufnehmen kann, dass im Wesentlichen ihre gesamte Emission in den Vorformling bzw. das aus diesem später gebildete Linsensystem eintreten kann. Mit anderen Worten ist die Tiefe der Ausnehmung vorzugsweise mindestens so groß wie die Höhe der Lichtquelle über der Basis.

Zweckmäßig ist der Vorformling bereits so gestaltet, dass er ebene Flächen für den nachfolgenden Aufbau der für die fertige Linsenanordnung gewünschten Auskopplungsbereiche aufweist. Vorteilhaft ist es, wenn diese Flächen eine Vielfalt von Gestaltungsmöglichkeiten für den Auskopplungsbereich zulassen. So kann beispielsweise der Vorformling selbst bereits ein Linsensystem darstellen, das durch seine Form und anderen Eigenschaften an der Austrittsfläche eine bestimmte Grundlichtverteilung aufweist. Diese Grundlichtverteilung wird durch den additiven Aufbau der Auskopplungsbereiche so moduliert, dass sich die gewünschte Lichtverteilung ergibt. Selbstverständlich ist es möglich, den additiven Aufbau nicht nur auf der gesamten Austrittsfläche, sondern auch nur auf einem Teil von dieser vorzunehmen.

In Betracht kommende additive Fertigungsverfahren sind, ohne darauf beschränkt zu sein, dreidimensionaler Druck (3D-Druck) mit Pulvern oder flüssigen oder geschmolzenen Materialien, Stereolithographie analog oder digital, Schmelzschichtverfahren (Fused Deposition Modeling) und Kaltgasspritzen. Die Daten zur Steuerung des additiven Fertigungsverfahrens können unmittelbar als digitale Steuerungssignale aus den Konstruktionsdateien des Vorformling und der fertigen Linse abgeleitet werden.

Das Material des Vorformlings und des im additiven Verfahren aufgebauten Auskopplungsbereichs kann dasselbe sein. Es können aber auch unterschiedliche Materialien verwendet werden. Auf diese Weise können beispielsweise bei gleicher Geometrie andere optische Eigenschaften (Lichtverteilungskurven) erreicht werden. Es kann auch vorteilhaft sein, wenn durch Verwendung eines entsprechenden Materials die Kratzempfindlichkeit oder die Flammenresistenz der Linse auf einer Seite verbessert wird.

Ferner ist es möglich, durch Verwendung eines definiert streuenden Materials für einen der Bereiche, beispielsweise mit dem gleichen Brechungsindex wie das Material des anderen Bereichs, eine Linse mit Streueigenschaft herzustellen.

Vorzugsweise werden übliche Kunststoffe für optische Systeme verwendet wie Polymethylmethacrylat, Polystyrol, Polycarbonat, optische Silicone, Cycloolefin-Polymere und -Copolymere (COP bzw. COC).

Das Material des Vorformlings hat bevorzugt einen hohen Brechungsindex, wenn möglichst der ganze Lichtstrom durch Totalreflexion im Linsensystem gehalten werden soll. Hierzu gehören beispielsweise Polycarbonat und Polymethylmethacrylat, wobei Letzteres häufig wegen seiner geringeren Dämpfung und seiner UV-Stabilität bevorzugt wird.

Das erfindungsgemäße Verfahren wird für die Fertigung von Linsenanordnungen angewendet. Solche Linsenanordnungen werden beispielsweise verwendet, um das von LED-Anordnungen emittierte Licht zu führen. Zum Beispiel kann es notwendig sein, für einen starken Scheinwerfer eine Vielzahl von LED einzusetzen, von denen jede mit einem Linsensystem versehen werden muss. Andererseits ist beispielsweise auch möglich, das von LED verschiedener Farben emittierte Licht mit einer Linsenanordnung zusammenzuführen. Zweckmäßig ist die Geometrie der LED-Anordnung gleich der der Linsenanordnung.

Erfindungsgemäß wird für eine Linsenanordnung ein Vorformling hergestellt, der eine Anzahl den einzelnen LED zugeordnete Einkopplungsbereiche umfasst, und der dann im Schritt b) mit Auskopplungsbereichen für die einzelnen Linsen versehen wird. Es ist aber auch möglich, eine Anordnung von Vorformlingen für Einzellinsen aufzubauen und diese dann mittels des erfindungsgemäßen additiven Fertigungsverfahrens im Schritt b) durch Bildung von Brücken zwischen den Einzellinsen miteinander fest zu verbinden.

Bei einer anderen erfindungsgemäßen Ausführungsform kann als Vorformling eine Linsenanordnung eingesetzt werden, die bereits Einkopplungsbereiche und Auskopplungsbereiche aufweist und bei der lediglich die Abstrahlcharakteristik verändert werden soll. Im Allgemeinen haben solche Linsen keine ebene Fläche für den Aufbau des Auskopplungsbereichs. Dies steht jedoch der erfindungsgemäßen Anwendung eines additiven Fertigungsverfahrens nicht im Wege. Besonders vorteilhaft hierbei ist es, dass man von massenhaft mit vorhandenem Spritzgusswerkzeug hergestellten Vorformlingen ausgehen kann und den Aufbau des speziellen gewünschten Auskopplungsbereichs auch in kleinen Stückzahlen wirtschaftlich ausführen kann.

Die nach dem erfindungsgemäßen Verfahren hergestellten Linsenanordnungen sind gewöhnlich so ausgelegt, dass das in den Einkopplungsbereich einfallende Licht, abgesehen von der Richtwirkung des Linsensystems, im Wesentlichen dieselbe Richtung wie das vom Auskopplungsbereich abgestrahlte Licht hat. In einer weiteren bevorzugten Ausführungsform ist die Linsenanordnung so gestaltet, dass das ausgekoppelte Licht in einer im Wesentlichen zum eingekoppelten Licht senkrechten Richtung abgestrahlt wird. Hierzu kann beispielsweise als Vorformling eine Platte eines Materials dienen, in die Licht an einer oder mehreren Seitenflächen eingekoppelt und an einer oder beiden der Basisflächen mittels einer additiv aufgetragenen Schicht gerichtet und ausgekoppelt wird.

Das erfindungsgemäße Verfahren eignet sich besonders für die Herstellung so genannter TIR-Linsen (TIR = totale innere Reflexion).

Bei Linsen dieser Art befindet sich die Lichtquelle, beispielsweise eine LED, in einer Kavität im Einkopplungsbereich, wodurch das seitlich abgestrahlte Licht der LED in den Linsenkörper eindringt und an dessen geeignet schräg gestalteten Seitenwänden in Richtung Auskopplungsbereich total reflektiert wird, während das nach vorn abgestrahlte Licht bereits diese Richtung hat und gegebenenfalls noch durch einen konvexen Teil des Linsenkörpers fokussiert werden kann. Ein Beispiel für eine solche Linse gibt EP 117 606 A1.

Zu Erfindung gehört auch eine Linsenanordnung für lichtemittierende Dioden, die a) einen durch Spritzguss hergestellten Abschnitt mit dem Einkopplungsbereich und b) einen durch ein additives Fertigungsverfahren erzeugten Bereich mit dem Auskopplungsbereich umfasst.

Ein besonderer Vorteil des erfindungsgemäßen Verfahrens ergibt sich für die Entwicklungsphase neuer Beleuchtungssysteme. Hier kann die Stückzahl bei der Fertigung der zu testenden Linsenanordnungen völlig flexibel an den Bedarf in den einzelnen Schritten der Entwicklung vom ersten Laborversuch bis zum anwendungstechnischen Feldversuch und darüber hinaus bis zur Produktionsstufe angepasst werden.

Nach dem erfindungsgemäßen Verfahren lassen sich nicht nur Linsenanordnungen zur Bündelung oder Richtung von Licht für Beleuchtungszwecke mit Lichtquellen wie LED und ähnlichen herstellen, sondern auch Linsenanordnungen für einen umgekehrten Strahlengang, wie sie beispielsweise als Konzentratoren zum Sammeln von Umgebungslicht beispielsweise für den Betrieb fotoelektrischer Bauteile oder zur Erhöhung der Lichtstärke auf der Lichtaustrittsseite Verwendung finden. Die Erfindung wird im Folgenden anhand von nicht beschränkenden Ausführungsbeispielen und der beigegebenen Zeichnungen näher erläutert, in denen zeigen:
Figur 1 eine TIR-Linse nach dem Stand der Technik (EP 117 606 A1),
Figuren 2 bis 4 eine erste Ausführungsform des erfindungsgemäßen Verfahrens,
Figuren 5 bis 7 eine zweite Ausführungsform des erfindungsgemäßen Verfahrens,
Figuren 8 bis 10 eine dritte Ausführungsform des erfindungsgemäßen Verfahrens,
Figuren 11 und 12 eine vierte Ausführungsform des erfindungsgemäßen Verfahrens.

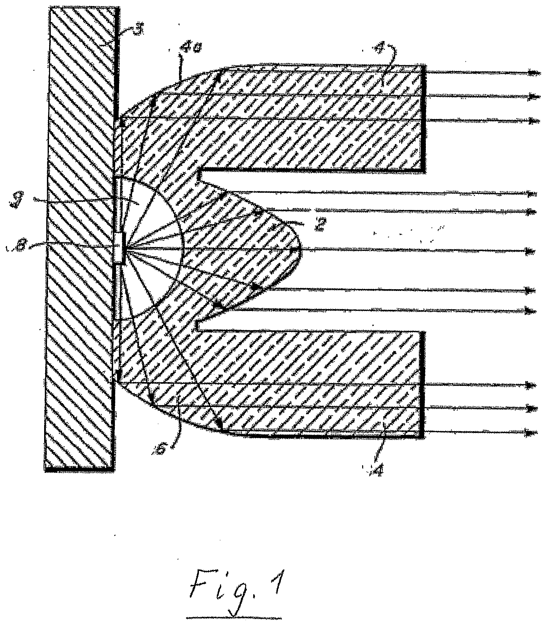

In Figur 1 ist die LED 8 auf der Basis 3 montiert und strahlt Licht in den durch die Basis begrenzten Halbraum aus. Die Linse 6 berührt mit ihrer Grundfläche die Basis 3 und weist in dieser Grundfläche eine sphärische Kavität 9 auf, welche die LED im gesamten Halbraum umgibt. Der Teil 2 der Linse 6 ist als zentrale Konvexlinse geformt und bricht das nach vorn, d.h. in großem Winkel von der Basis abgestrahlte Licht in eine zur optischen Achse (Symmetrieachse der Linse) parallele Richtung. Das seitlich, also in geringem Winkel zur Basis abgestrahlte Licht fällt auf die schrägen Seiten 4a der Seitenteile 4 der Linse und wird dort total reflektiert, so dass es nun ebenfalls parallel zur optischen Achse strahlt. Die schrägen Seiten sind hier wie bei einem normalen Reflektor parabolisch geformt, es ist aber auch jede andere Form möglich, welche eine gewünschte Lichtverteilung hervorbringt.

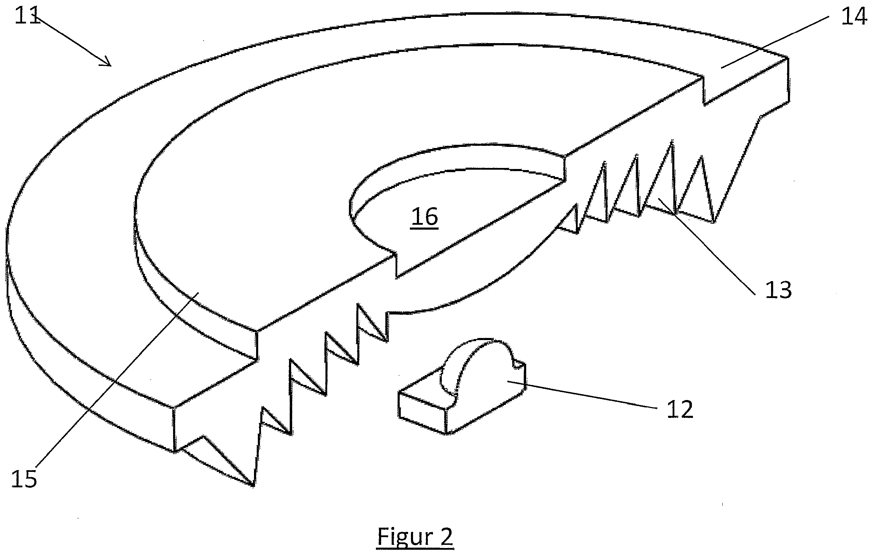

Eine erste erfindungsgemäße Ausführungsform ist in den Figuren 2 bis 4 veranschaulicht. Figur 2 zeigt einen Vorformling 11 für eine Linsenanordnung in isometrischer Schnittdarstellung mit einer geeignet positionierten LED 12. Auf einer Seite (hier die untere) ist der Vorformling bereits mit einem Linsensystem nach Fresnel als Einkopplungsbereich versehen, das auch eine Kavität für die LED 12 bildet. Die gegenüberliegende Seite (hier die obere) zeigt lediglich senkrecht zur optischen Achse ausgerichtete Oberflächen 14, 15 und 16. Diese Oberflächen sind für den Aufbau des Auskopplungsbereichs vorbereitet. Selbstverständlich kann auch hier anstelle der abgestuften Oberflächen eine durchgehende Fläche vorgesehen werden. Bei der Ausgestaltung des Vorformlings ist zu beachten, dass er einerseits möglichst wenig Material aus der additiven Fertigungsstufe benötigt, andererseits aber für möglichst viele Zielformen verwendbar ist. Die Vorbereitung des Auskopplungsbereichs für den additiven Aufbau schließt nicht nur völlig ebene und abgestufte ebene Flächen ein, wie es in den gezeigten Beispielen ausgeführt ist, sondern kann auch geeignet gekrümmte Flächen umfassen.

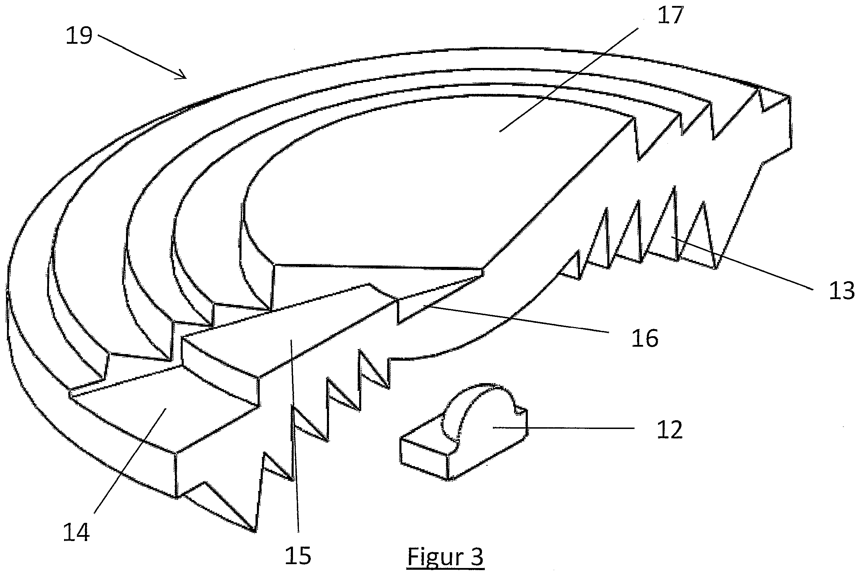

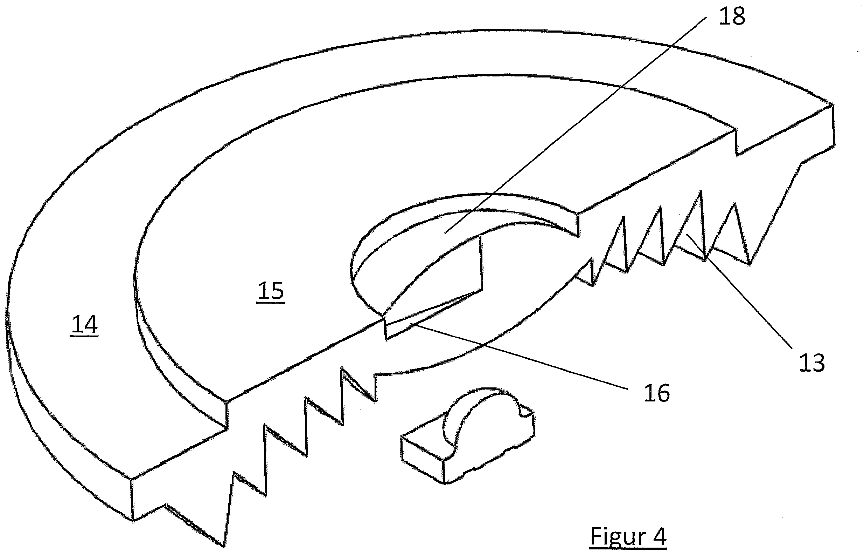

In Figur 3 ist ein Linsensystem 19 der Linsenanordnung dargestellt, das aus dem in Figur 2 gezeigten Vorformling hergestellt wurde. Der Schnitt ist hier stufenweise so geführt, das neben der durch ein additives Fertigungsverfahren aufgetragenen Form 17 einer Fresnellinse noch die Flächen 14, 15 und 16 des Vorformling zu erkennen sind. Figur 4 zeigt ein völlig anderes System 20, das aus dem gleichen Vorformling 11 hergestellt wurde, indem lediglich die zentrale Oberfläche 16 zu einer Konvexlinse 18 aufgebaut wurde. Damit ist gezeigt, dass aus gleichen Vorformlingen erfindungsgemäß völlig verschiedene Linsenanordnungen gefertigt werden können.

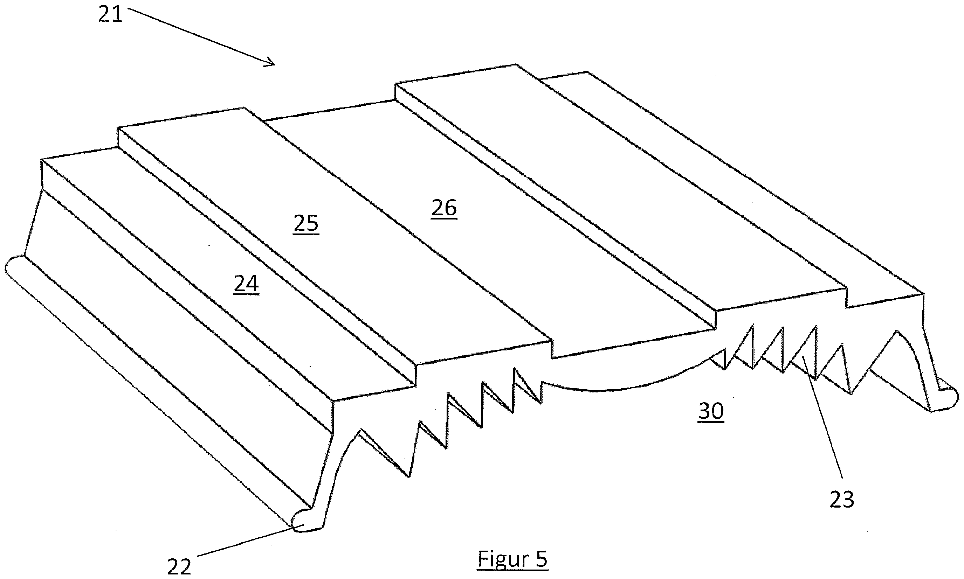

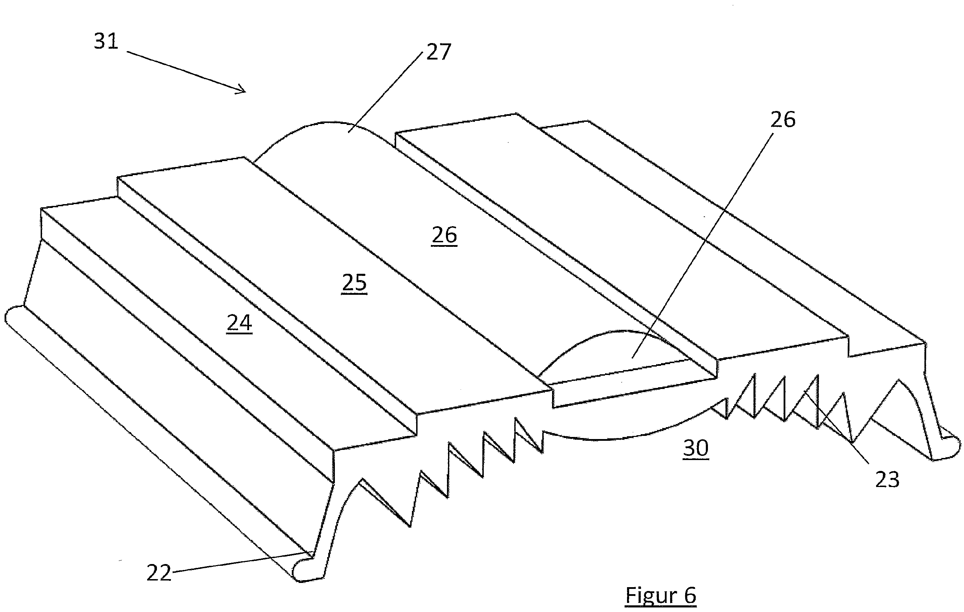

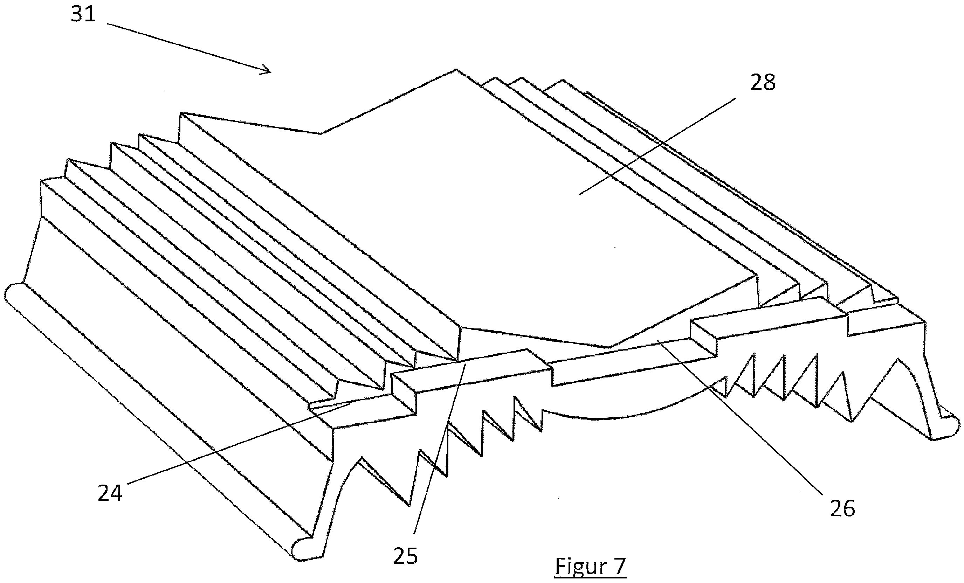

Figur 5 zeigt einen Vorformling 21 für eine zweite Ausführungsform des erfindungsgemäßen Verfahrens in isometrischer Schnittdarstellung. Hierbei soll ein lineares Linsensystem in einer Linsenanordnung erzeugt werden. Durch die am Vorformling 21 ausgebildeten Standleisten 22 wird eine Kavität 30 gebildet, welche nach Fertigstellung des Linsensystems die lineare Lichtquelle aufnehmen kann. Auf der zur Kavität gewandten Seite des Vorformlings ist bereits die Stufenlinse 23 vorgebildet. Auf der gegenüberliegenden Seite sind die Flächen 24, 25, 26 für die additive Fertigung vorbereitet. Für die Gestaltung dieser Flächen gelten die gleichen Überlegungen wie oben erwähnt. In Figur 6 ist ein erstes aus diesem Vorformling gefertigtes Linsensystem 31 dargestellt. Hierbei ist lediglich auf die zentrale Oberfläche 26 eine konvexe Linse 27 aufgetragen worden. Ein weiteres nach der zweiten Ausführungsform der Erfindung herstellbares Linsensystem 31 ist in Figur 7 gezeigt. Hierbei ist auf die Flächen 24, 25 und 26 des Vorformlings die Stufenlinse 28 aufgebaut worden.

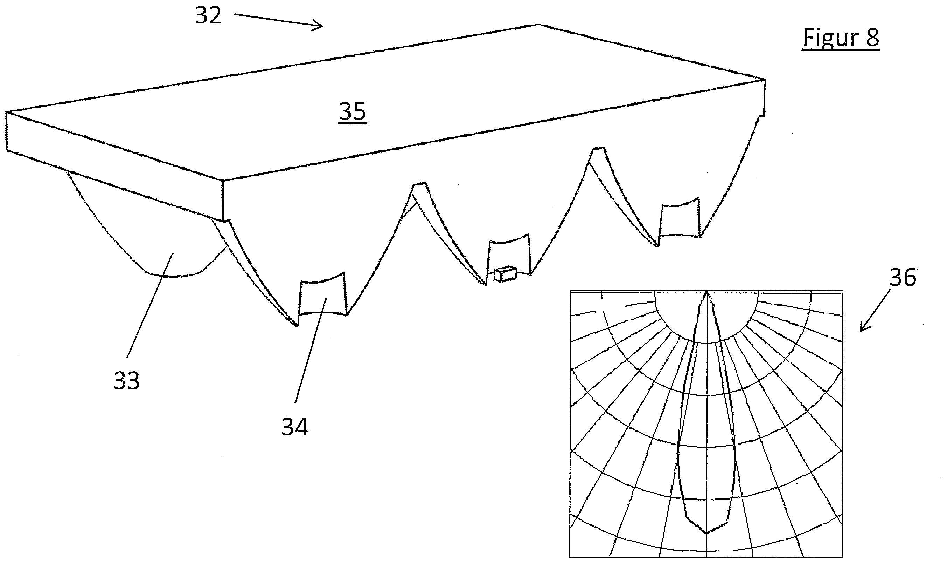

Figur 8 stellt einen weiteren Vorformling 32 für eine dritte Ausführungsform des erfindungsgemäßen Verfahrens ebenfalls in isometrischer Schnittdarstellung dar. Die mit diesem Vorformling herstellbaren Linsenanordnungen sind für ebene Anordnungen einer Mehrzahl von Lichtquellen wie beispielsweise LED, vorgesehen. Auf der den Lichtquellen zugewandten Seite für den Einkopplungsbereich (hier die untere) sind paraboloidförmige Vorsprünge 33 ausgebildet, die jeweils eine Kavität 34 aufweisen, welche die Lichtquellen aufnehmen können. In diesem Fall ist die gegenüberliegende Oberfläche 35 (hier die obere) plan ausgebildet, was eine besondere Flexibilität für die Weiterverarbeitung ermöglicht. Es ist aber ebenso gut möglich, auch auf dieser Fläche bereits einer Anordnung von Vorsprüngen oder Ausnehmungen vorzusehen, welche die Fertigung ähnlich wie oben beschrieben vereinfachen können. Selbstverständlich lässt sich auch der Vorformling bereits als Linsensystem verwenden. Man erhält dann die in der Figur ebenfalls abgebildete Lichtverteilungskurve 36 (in willkürlichen Einheiten, aber gleich für alle angegebenen Lichtverteilungskurven) .

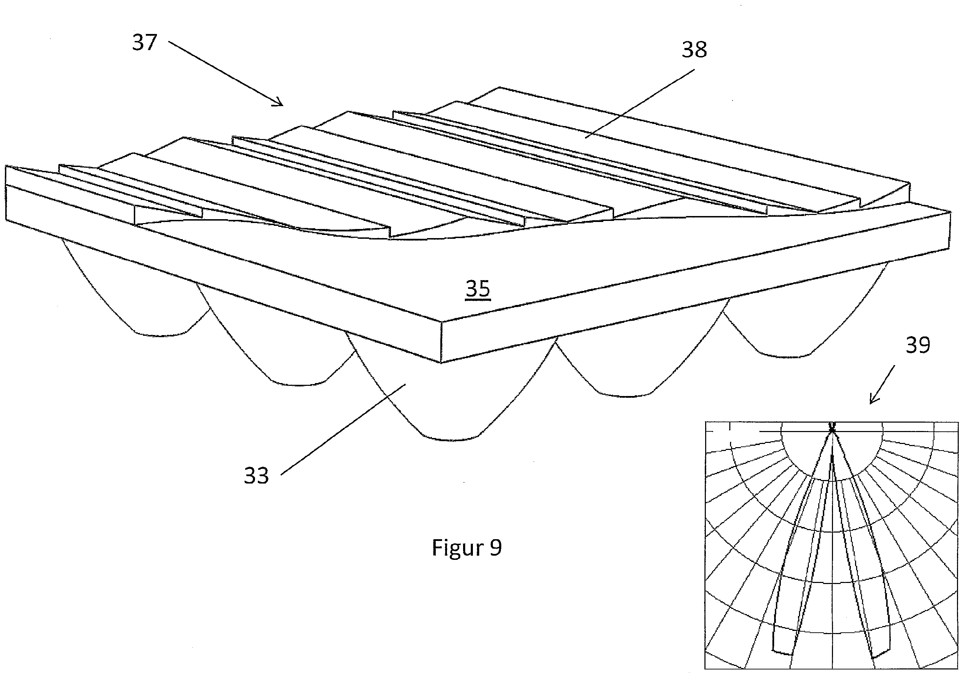

Figur 9 zeigt eine unter Verwendung des vorbeschriebenen Vorformlings hergestellte Linsenanordnung 37 für eine Lichtquellenanordnung. Auf die Oberfläche 35 wurde ein Auskopplungsbereich in Form einer Stufenlinse 38 aufgebaut. Die zugehörige Lichtverteilungskurve 39 zeigt 2 im Vergleich zum Vorformling schärfer gebündelte Strahlen.

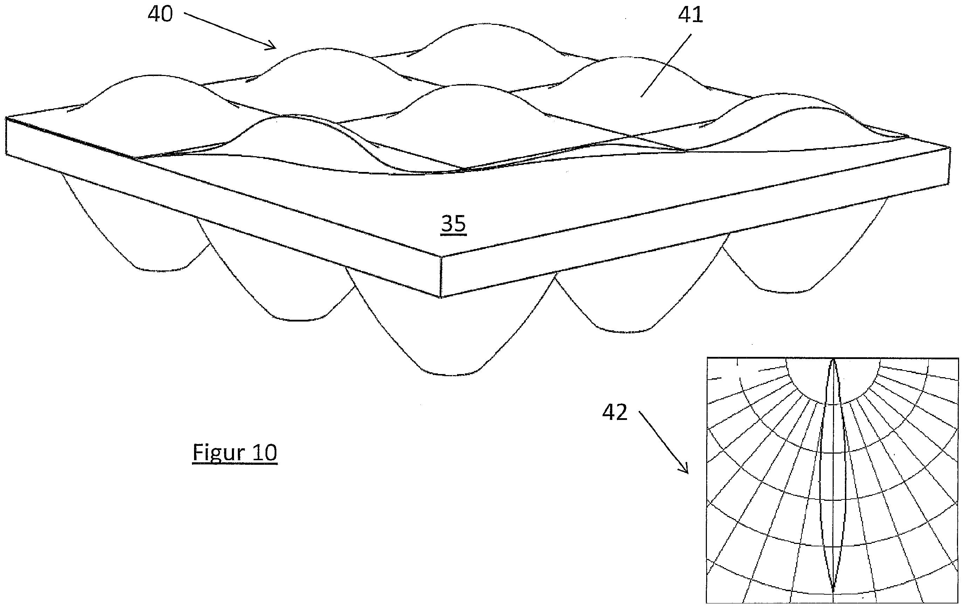

Ein weiteres Beispiel zur dritten Ausführungsform der Erfindung zeigt Figur 10. Die Linsenanordnung 40 wurde hier durch Auftragen einer Anordnung von Konvexlinsen 41 auf die Fläche 35 des Vorformlings erzeugt. Die zugehörige Lichtverteilungskurve 42 zeigt einen sehr scharf gebündelten Strahl.

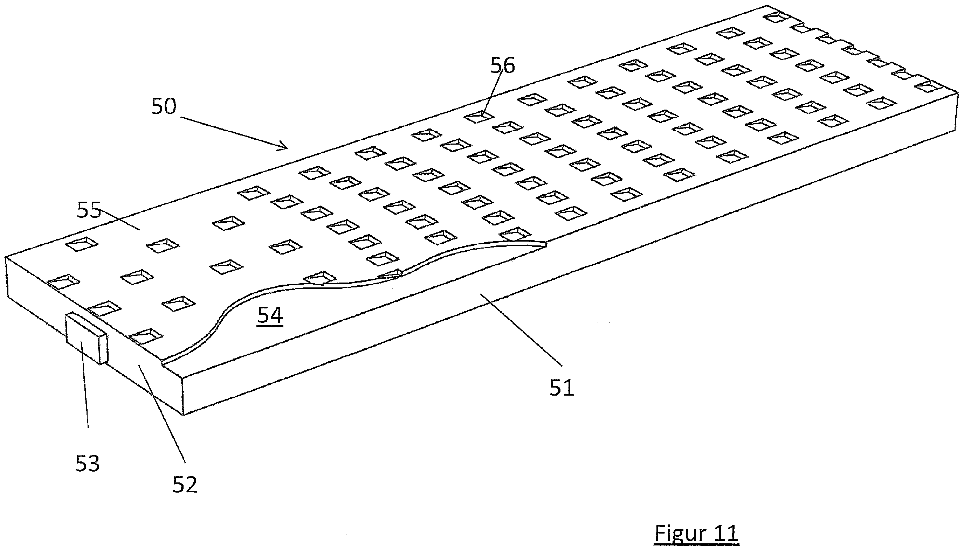

Figur 11 beschreibt eine Linsenanordnung 50 zur vierten Ausführungsform des erfindungsgemäßen Verfahrens, bei dem der Einkopplungsbereich nicht dem Auskopplungsbereich gegenüberliegt, sondern an einer Seitenfläche 52 eines rechteckigen plattenförmigen Vorformlings 51 vorgesehen ist, der eine Oberfläche 54 für den additiven Aufbau aufweist. Durch additive Fertigung wurde eine Schicht 55 als Auskopplungsbereich aufgetragen, welche vertiefte Strukturen 56 aufweist. Das Licht der im Einkopplungsbereich 52 angebrachten Lichtquelle 53 wird zunächst in bekannter Weise durch Totalreflexion im Linsenkörper 51, 55 gehalten und an den Strukturen 56 nach außen abgelenkt. Durch die Gestaltung dieser Strukturen können beliebige Lichtverteilungen erzielt werden. Diese Ausführungsform ist besonders vorteilhaft wegen ihrer flachen Bauweise.

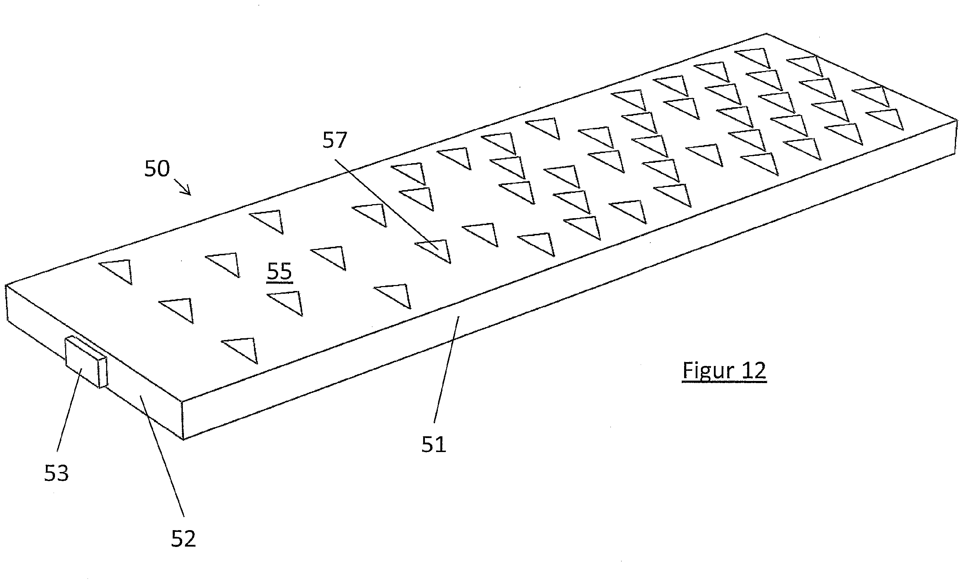

Ein weiteres Linsensystem 50 zu dieser Ausführungsform ist in Figur 12 gezeigt. Hierbei sind die auskoppelnden Strukturen 57 auf der durch additive Fertigung zugefügten Schicht 55 erhaben.

### Verfahren zur Herstellung von Linsenanordnungen

- 2: Zentrale Konvexlinse
- 3: Basis
- 4: Schenkel der TIR-Linse
- 4a: total reflektierende Fläche
- 6: TIR-Linse
- 8: lichtemittierende Diode (LED)
- 9: sphärische Kavität
- 11: Vorformling
- 12: LED
- 13: Fresnellinse
- 14, 15, 16: Oberfläche für Auskopplungsbereich
- 17: additiv aufgetragene Fresnellinse
- 18: additiv aufgetragene Konvexlinse
- 19, 20: Linsensysteme
- 21: Vorformling
- 22: Standleisten
- 23: Stufenlinse im Vorformling
- 24, 25, 26: ebene Flächen des Vorformlings
- 27: Konvexlinse
- 28: Stufenlinse
- 30: Kavität
- 31: Linsensystem
- 32: Vorformling
- 33: Paraboloid-Vorsprünge
- 34: Kavität
- 35: Oberfläche für additiven Aufbau
- 36, 39, 42: Lichtverteilungskurven
- 37: Linsenanordnung
- 38: Stufenlinse
- 40: Linsenanordnung
- 41: Konvexlinsen
- 50: Linsensystem
- 51: Vorformling
- 52: Seitenflächen
- 53: Lichtquelle
- 54: Oberfläche für additiven Aufbau
- 55: aufgetragene Schicht
- 56: vertiefte Strukturen
- 57: erhabene Strukturen

## Patentansprüche

1. Verfahren zur Herstellung einer Linsenanordnung (37, 40, 50) aus transparentem Kunststoff für eine LED-Anordnung, umfassend die Schritte
a) Spritzgussformen eines Vorformlings (32, 51) der Linsenanordnung, welcher Einkopplungsbereiche (33, 52) der fertigen Linsenanordnung umfasst und
b) Ausbilden von Auskopplungsbereichen (38, 41, 56, 57) der fertigen Linsenanordnung durch Anwendung eines additiven Fertigungsverfahren auf Flächen (14, 15, 25, 26, 35) des Vorformlings.

2. Verfahren nach Anspruch 1, zusätzlich zum Schritt b) den Schritt
c) Modifizierung der optischen Eigenschaften der Einkopplungsbereiche des Vorformlings durch Anwendung eines additiven Fertigungsverfahrens umfassend.

3. Verfahren nach Anspruch 1, **dadurch gekennzeichnet, dass** der Vorformling in seinen Einkopplungsbereichen Kavitäten oder Ausnehmungen (30, 34) aufweist, welche die LED der LED-Anordnung aufnehmen können.

4. Verfahren nach Anspruch 1 oder 3, **dadurch gekennzeichnet, dass** der Vorformling ebene Flächen (35, 54) aufweist, auf welchen die Auskopplungsbereiche durch ein additives Fertigungsverfahren gebildet werden.

5. Verfahren nach Anspruch 1 bis 4, **dadurch gekennzeichnet, dass** der Vorformling Linsenanordnung mit Einkopplungsbereichen und Auskopplungsbereichen umfasst, deren Auskopplungsbereiche durch ein additives Fertigungsverfahren verändert werden.

6. Verfahren nach einem der vorangehenden Ansprüche, **dadurch gekennzeichnet, dass** das additive Fertigungsverfahren ein 3-D-Druckverfahren, ein stereolithographisches Verfahren, ein Schmelzschichtverfahren oder Kaltgasspritzen ist.

7. Verfahren nach einem der vorangehenden Ansprüche, **dadurch gekennzeichnet, dass** die Linsenanordnung eine Anordnung aus TIR-Linsen ist.

8. Verfahren nach einem der vorangehenden Ansprüche, **dadurch gekennzeichnet, dass** beim Aufbau der Auskopplungsbereiche auf eine Anordnung von Vorformlingen für Einzellinsen diese mittels des additiven Fertigungsverfahrens im Schritt b) durch Bildung von Brücken zwischen den Einzellinsen zu einer Linsenanordnung fest verbunden werden.

9. Verfahren nach einem der vorangehenden Ansprüche, **dadurch gekennzeichnet, dass** die Geometrie der Linsenanordnung gleich der der LED-Anordnung ist.

10. Linsenanordnung, umfassend
a) durch Spritzguss hergestellte Abschnitte mit Einkopplungsbereichen der Linsenanordnung und
b) durch ein additives Fertigungsverfahren erzeugte Bereiche mit den Auskopplungsbereichen.

11. Verwendung einer Linsenanordnung nach Anspruch 10 zur Bündelung oder Richtung von Licht einer LED-Anordnung.

12. Verwendung einer Linsenanordnung nach Anspruch 10 als Konzentrator für das Sammeln von Umgebungslicht zur Erhöhung der Lichtstärke auf der Lichtaustrittsseite.

## Claims

1. Method for producing a lens array (37, 40, 40) made of transparent plastic for an LED array, comprising the steps
a) injection molding of a preform (32, 51) of the lens array which comprises coupling regions (33, 52) of the finished lens array and
b) forming decoupling regions (38, 41, 56, 57) of the finished lens array by using an additive manufacturing process on surfaces (14, 15, 25, 26, 35) of the preform.

2. Method according to claim 1, comprising in addition to step b) the step
c) modifying the optical properties of the coupling regions of the preform by using an additive manufacturing process.

3. Method according to claim 1, **characterized in that** the preform has cavities or recesses (30, 34) in its coupling regions which can accommodate the LED of the LED array.

4. Method according to claim 1 or 3, **characterized in that** the preform has plane surfaces (35, 54) on which the decoupling regions are formed by means of an additive manufacturing process.

5. Method according to claim 1 to 4, **characterized in that** preform comprises a lens array having coupling regions and decoupling regions, the decoupling regions of which are changed through an additive manufacturing process.

6. Method according to any one of the preceding claims, **characterized in that** the additive manufacturing process is a 3D printing process, a stereolithographic process, fused deposition modeling or cold gas spraying.

7. Method according to any one of the preceding claims, **characterized in that** lens array is an array of TIR lenses.

8. Method according to any one of the preceding claims, **characterized in that**, when the decoupling regions are built up on an arrangement of preforms for individual lenses, these are firmly connected to form a lens array by means of the additive manufacturing process in step b) by forming bridges between the individual lenses.

9. Method according to any one of the preceding claims, **characterized in that** the geometry of the lens array is the same as that of the LED array.

10. Lens array comprising
a) sections produced by injection molding with coupling regions of the lens array and
b) regions produced by an additive manufacturing process with the decoupling regions.

11. Use of a lens array according to claim 10 for focusing or direction of light of an LED array.

12. Use of a lens array according to claim 10 as a concentrator for collecting ambient light to increase the luminous intensity on the light output side.

## Revendications

1. Procédé de fabrication d'un réseau de lentilles (37, 40, 40) en plastique transparent pour un réseau de DEL, comprenant les étapes suivantes
a) moulage par injection d'une préforme (32, 51) du réseau de lentilles qui comprend des zones de couplage (33, 52) du réseau de lentilles fini et
b) former des zones de découplage (38, 41, 56, 57) du réseau de lentilles fini en utilisant un processus de fabrication additive sur les surfaces (14, 15, 25, 26, 35) de la préforme.

2. Procédé selon la revendication 1, comprenant en plus de l'étape b) l'étape
c) modifier les propriétés optiques des zones de couplage de la préforme en utilisant un processus de fabrication additive.

3. Procédé selon la revendication 1, **caractérisé en ce que** la préforme présente des cavités ou des évidements (30, 34) dans ses zones de couplage qui peuvent accueillir la DEL du réseau de DEL.

4. Procédé selon la revendication 1 ou 3, **caractérisé en ce que** la préforme présente des surfaces planes (35, 54) sur lesquelles les zones de découplage sont formées au moyen d'un procédé de fabrication additive.

5. Procédé selon la revendication 1 à 4, **caractérisé en ce que** la préforme comprend un réseau de lentilles ayant des zones de couplage et des zones de découplage, dont les zones de découplage sont modifiées au moyen d'un processus de fabrication additive.

6. Procédé selon l'une quelconque des revendications précédentes, **caractérisé par** en ce que le procédé de fabrication additive est un procédé d'impression 3D, un procédé stéréolithographique, la modélisation par dépôt fusionné ou la pulvérisation de gaz froid.

7. Procédé selon l'une quelconque des revendications précédentes, **caractérisée en ce que** le réseau de lentilles est un réseau de lentilles TIR.

8. Procédé selon l'une quelconque des revendications précédentes, **caractérisé en ce que**, lorsque les zones de découplage sont construites sur un arrangement de préformes pour des lentilles individuelles, celles-ci sont fermement reliées pour former un réseau de lentilles au moyen du processus de fabrication additive à l'étape b) en formant des ponts entre les lentilles individuelles.

9. Procédé selon l'une quelconque des revendications précédentes, **caractérisé en ce que** la géométrie du réseau de lentilles est la même que celle du réseau de DEL.

10. Réseau de lentilles comprenant
a) des sections produites par moulage par injection avec des zones de couplage du réseau de lentilles et
b) des zones produites par un processus de fabrication additive avec les zones de découplage.

11. Utilisation d'un réseau de lentilles selon la revendication 10 pour la focalisation ou la direction de la lumière d'un réseau de DEL.

12. Utilisation d'un réseau de lentilles selon la revendication 10 comme concentrateur pour collecter la lumière ambiante afin d'augmenter l'intensité lumineuse du côté de la sortie de la lumière.
